# FASCICULE DE BREVET EUROPEEN

(11) **EP 1 795 937 B1**
(45) Date de publication et mention de la délivrance du brevet: **01.04.2009**
(21) Numéro de dépôt: 06291872.7
(22) Date de dépôt: 04.12.2006
(51) Int. Cl.: G02B 15/04, G02B 23/12, G02B 7/00

(54) **Changeur de champ spherique**
Sphärischer Feldwechsler
Spherical field changer

(30) Priorité: 06.12.2005 FR 0512369
(43) Date de publication de la demande: 13.06.2007
(73) Titulaire: SAGEM Défense Sécurité, 75015 Paris (FR)
(72) Inventeur: Brugier, Anthony, Sagem défense Sécurité, 75015 Paris (FR); Pierrois, Rodolphe, Sagem défense Sécurité, 75015 Paris (FR)
(74) Mandataire: Gorrée, Jean-Michel

(56) Documents cités:
- FR-A- 2 727 527
- US-A1- 2004 114 221
- US-A1- 2005 117 208

## Description

L'invention concerne un dispositif de changement de champ optique.

On trouve de tels dispositifs dans de nombreuses applications. Certains microscopes et télescopes en sont équipés. Dans le domaine de la navigation aérienne, il est également courant d'utiliser des caméras (par exemple thermiques) équipées de dispositifs de changement de champ.

Un dispositif de changement de champ (ci-après plus simplement dénommé changeur de champ) comprend en général un magasin tournant, sur lequel sont prévues plusieurs voies optiques ayant des grossissements différents.

Chaque voie optique présente un axe optique propre, que la rotation du magasin met en coïncidence avec un axe optique fixe correspondant à la direction d'observation.

Dans certains changeurs de champ (notamment ceux équipant les microscopes), le magasin se présente sous la forme d'un disque monté en rotation autour d'un axe confondu avec son axe de symétrie, et sur lequel sont montés plusieurs objectifs dont les axes optiques propres sont inclinés par rapport à l'axe de rotation. Le passage d'un objectif à son voisin se fait par rotation du magasin d'un angle prédéterminé correspondant à l'écart angulaire entre les projections, dans un plan perpendiculaire à l'axe de rotation, des axes optiques propres des objectifs.

Compte tenu des différentes tailles des objectifs, la masse d'un tel changeur n'est pas équilibrée, la rotation du magasin déplaçant le centre de gravité du changeur de champ sur un cercle centré sur l'axe de rotation et dont le diamètre, plus ou moins important, est fonction des masses respectives des objectifs.

Ce type de changeur de champ donne satisfaction pour le matériel optique de laboratoire, dans le choix duquel les contraintes de masse et d'équilibrage ne sont pas déterminantes.

En revanche, ce type de changeur ne convient pas, notamment, pour un matériel optique de grandes dimensions (par exemple dans le domaine des télescopes), où les masses des optiques sont importantes et où des déséquilibres peuvent entraîner des défauts d'alignement en les rendant plus sensibles aux environnements vibratoires souvent sévères dans les conditions d'utilisation de ces matériels (chocs, vibrations, accélérations...), ou pour les dispositifs d'aide à la navigation aérienne, en particulier dans le domaine militaire, où la masse embarquée doit être minimisée et où la précision de visée du changeur dépend de son bon équilibrage.

Des efforts vers un meilleur équilibrage du changeur ont déjà été accomplis : on pourra notamment se référer au document FR 2 727 527, ou à son équivalent US 5 726 814, qui décrit un changeur de champ à magasin cubique, portant trois composants optiques montés sur des faces du cube et alternativement mis en alignement sur l'axe optique par rotation du magasin d'un angle de 120° autour d'une diagonale du cube.

Si ce dispositif marque un réel progrès en terme d'équilibrage, il présente cependant un certain nombre d'inconvénients :
- premièrement, chaque composant optique occupant une paire de faces opposées du cube, celui-ci ne peut porter, au maximum, que trois voies optiques,
- deuxièmement, l'encombrement du magasin correspond à une sphère dont le diamètre est égal à la longueur de sa diagonale, c'est-à-dire environ 1,7 fois le côté du cube, lequel est nécessairement supérieur au diamètre de la lentille du composant optique le plus encombrant. En d'autres termes, il apparaît difficile de maîtriser la taille du magasin.

Un but de l'invention est notamment de remédier à ces inconvénients, en proposant un changeur de champ optimisé à la fois en termes de masse, d'encombrement et d'équilibrage.

A cet effet, l'invention propose un dispositif de changement de champ comprenant :
- un magasin tournant de forme générale sphérique, monté en rotation autour d'un axe de rotation confondu avec un axe de symétrie du magasin incliné par rapport à un axe optique principal fixe, et
- au moins trois voies optiques prévues sur ledit magasin et présentant des axes optiques respectifs concourants inclinés d'un même angle par rapport à l'axe de rotation ;
ledit magasin pouvant tourner autour de son axe de rotation suivant des angles de rotation prédéterminés pour placer alternativement chacune des voies optiques dans l'axe optique principal, les voies optiques étant disposées sur le magasin de telle sorte qu'au moins deux angles de rotation du magasin sont différents.

Suivant un mode de réalisation, au moins l'un des angles de rotation du magasin est différent de 120°. Les angles de rotation sont, par exemple, approximativement de 140°, 120°, 100°.

Chaque voie optique peut comprendre au moins un alésage réalisé dans le magasin, et deux d'entre elles comprennent par exemple au moins une lentille montée dans un alésage.

Suivant un mode de réalisation, chaque voie optique comprend une paire d'alésages diamétralement opposés réalisés dans le magasin, et deux au moins des voies optiques comprennent un jeu de lentilles montées dans deux alésages diamétralement opposés, respectivement.

L'angle d'inclinaison de l'axe de rotation du magasin par rapport à l'axe optique principal est de préférence compris entre 55° et 65°. Suivant un mode particulier de réalisation, cet angle est de 59,5°.

En général ces systèmes comportent trois champs :
- un grand champ (par exemple de l'ordre de 30° à 55°) appelé souvent champ de navigation, car présentant une « vision » de l'environnement proche de la vision à l'oeil nu et permettant à l'utilisateur de remplir ses fonctions de pilotage et de navigation de nuit ;
- un champ moyen (par exemple de l'ordre de 5° à 10°) permettant la détection et la localisation de cibles ou d'objectifs ; et enfin
- un petit champ (par exemple de l'ordre de 0,5° à 2°) permettant la reconnaissance de la cible et son identification.

Typiquement les voies optiques peuvent définir par exemple des champs d'ouvertures angulaires respectives d'environ 1°, 10° et 40°.

De plus, il peut exister un champ optique supplémentaire, qui est destiné à la calibration du détecteur : ou d'envoyer sur le détecteur (barrette, capteur matriciel) une image uniforme en température de façon à mesurer toutes les inhomogénéités de la détection en fonction du champ et de pouvoir ainsi les compenser de façon à ne pas perturber l'image que l'on désire capter.

L'invention propose également une caméra comprenant, disposés coaxialement sur l'axe optique, un module optique frontal, un dispositif de changement de champ tel que décrit ci-dessus, un module optique arrière incluant un élément de focalisation, et un module de détection.

D'autres objets et avantages de l'invention apparaîtront à la lumière de la description faite ci-après en référence aux dessins annexés dans lesquels :
- la figure 1 est une vue de face en perspective partielle montrant une caméra équipée d'un dispositif de changement de champ selon l'invention ;
- la figure 2 est une vue de face en perspective montrant le magasin seul du dispositif de changement de champ de la figure 1 ;
- la figure 3 est une vue en coupe montrant le magasin de la figure 2 suivant le plan de coupe III-III ;
- les figures 4 à 7 sont des vues similaires à la figure 1, montrant les étapes de construction du changeur de champ.

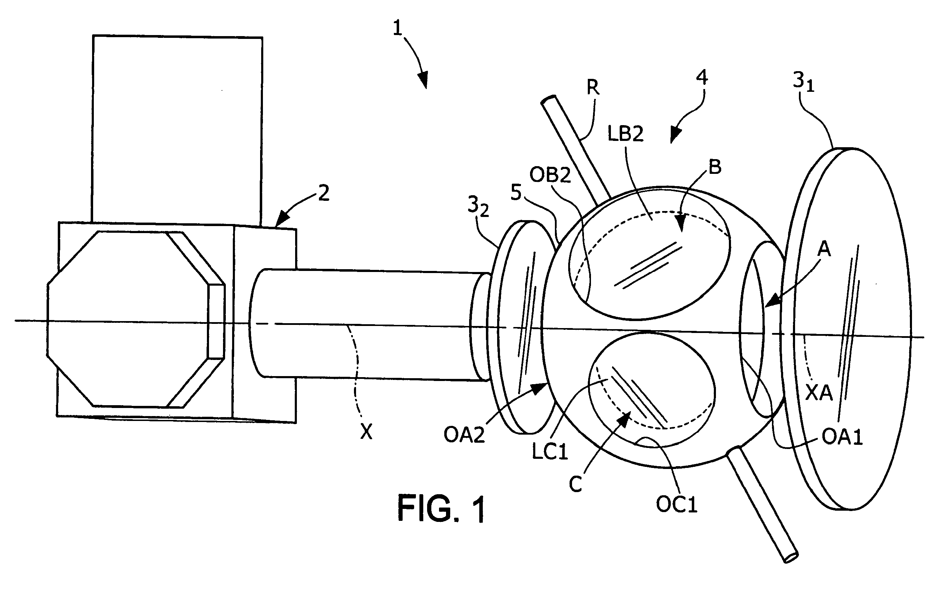

Sur la figure 1 est représentée une caméra 1 comprenant, montés dans un boîtier non représenté :
- un module optique frontal 3₁, pouvant typiquement comprendre au moins une lentille de grand diamètre,
- un dispositif 4 de changement de champ permettant de faire varier la capacité de grossissement de la caméra 1,
- un module optique arrière comportant un élément de focalisation 3₂, et
- un module 2 de détection,
tous disposés coaxialement sur un axe optique X.

Le dispositif 4 de changement de champ, ci-après simplement dénommé changeur de champ ou changeur, comprend un magasin 5 tournant de forme générale sphérique, monté en rotation par rapport au boîtier de la caméra 1 autour d'un axe R de rotation, confondu avec un axe de symétrie de révolution de la sphère et incliné par rapport à l'axe optique principal X suivant un angle α prédéterminé. Cet angle est strictement compris entre 0° et 90°. Plus précisément, il est de préférence compris entre 55° et 65° et, suivant un mode particulier de réalisation, il est de 59, 5°.

Le changeur 4 comprend en outre plusieurs voies optiques, typiquement trois, respectivement A, B, C comme illustré, disposées sur le magasin, lequel se présente en pratique sous la forme d'une sphère creuse réalisée dans un alliage léger à base d'aluminium ou de magnésium.

Chaque voie optique A, B, C comprend une paire d'ouvertures cylindriques (ou tronconiques) diamétralement opposées réalisées dans le magasin, respectivement référencées OA1 et OA2 pour la voie A, OB1 et OB2 pour la voie B, OC1 et OC2 pour la voie C, et dans lesquelles, comme nous le verrons ci-après, peuvent être montées des lentilles.

Les deux ouvertures d'une même voie (par exemple OA1 et OA2) sont centrées sur un axe commun, appelé axe optique propre de la voie optique correspondante. Les axes optiques respectifs des trois voies, respectivement référencés XA, XB et XC, sont concourants au centre géométrique O du magasin 5.

Les axes optiques XA, XB, XC sont inclinés d'un même angle par rapport à l'axe de rotation du magasin. Cet angle est égal à l'angle α d'inclinaison de l'axe R de rotation par rapport à l'axe optique principal X.

En d'autres termes, les axes optiques XA, XB, XC sont répartis sur un cône CN de révolution centré sur l'axe R de rotation du magasin 5, dont le sommet est confondu avec le centre géométrique du magasin 5, et dont le demi-angle au sommet est égal à l'angle α (59,5° dans le mode de réalisation préféré).

De la sorte, en faisant tourner le magasin 5 autour de son axe R de rotation, il est possible de mettre chacun des axes propres XA, XB, XC des voies A, B C en coïncidence avec l'axe optique principal X. Les angles de rotation du magasin 5 autour de son axe R, pour le changement de champ, sont prédéterminés et dépendent de la disposition des voies A, B, C sur le magasin 5.

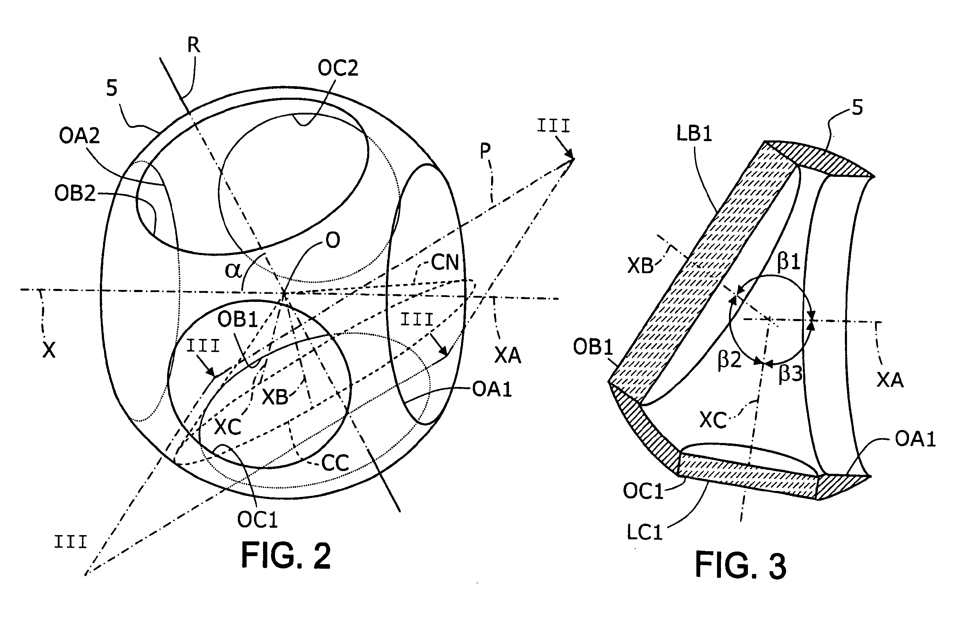

Cette disposition n'est pas symétrique, c'est-à-dire que deux au moins des angles β1, β2 et β3, qui séparent les projections des axes optiques propres XA, XB, XC dans un plan P perpendiculaire à l'axe R de rotation (ces angles sont égaux aux angles de rotation du magasin 5), sont différents (Cf. figure 3).

Suivant un mode de réalisation, l'angle β1 séparant la projection dans P de l'axe optique XA de la voie A de la projection de celui XB de la voie B est de 140° environ, et l'angle β2 séparant la projection de l'axe optique XB de la voie B de la projection de celui XC de la voie C est de 120° environ. Par complémentarité, il en résulte que l'angle β3 séparant la projection de l'axe optique XC de la voie C de la projection de l'axe optique XA de la voie A est de 100°.

Cette disposition asymétrique des voies optiques A, B, C vise à minimiser le diamètre extérieur du magasin 5, de manière à minimiser le poids (et donc l'inertie) du changeur 4.

Chaque voie optique définit, en combinaison avec la lentille d'objectif, un champ de vision particulier, dont l'angle d'ouverture dépend de la présence ou non de lentilles et de leur pouvoir grossissant.

Le choix des champs dépend de l'utilisation que l'on compte faire de la caméra 1. Pour une utilisation dans l'assistance à la navigation de combat en hélicoptère, on peut convenir que les trois voies optiques A, B, C de l'exemple envisagé sont choisies de la façon suivante :
- en voie A, un petit champ, ayant par exemple une ouverture angulaire d'environ 0,5° à 2°, typiquement d'environ 1°, correspondant à un fort pouvoir de grossissement et destiné à la poursuite (« tracking »),
- en voie B, un champ moyen, ayant par exemple une ouverture angulaire d'environ 5° à 10°, typiquement d'environ 10°, correspondant à un pouvoir de grossissement moyen et destiné à la détection ;
- en voie C enfin, un grand champ, ayant par exemple une ouverture angulaire d'environ 30° à 55°, typiquement d'environ 40°, correspondant à un faible pouvoir de grossissement (grand angle) et destiné à la navigation normale.

Les voies B et C sont toutes deux équipées d'une paire de lentilles LB1 et LB2 d'une part, LC1 et LC2 d'autre part, constituant un système optique afocal, tandis que la voie A est dépourvue de lentille, le faisceau F transmis par la lentille d'objectif 3 traverse librement - c'est-à-dire sans réfraction - les ouvertures OA1, OA2 correspondantes.

Pour illustrer ce qui précède, on a représenté sur la figure 2 une sphère creuse (sans épaisseur) dans laquelle sont pratiqués des trous à contour circulaire matérialisant les alésages OA1, OA2, OB1, OB2, OC1, OC2, de chacune des voies A, B, C. On a tracé en pointillés le cône de révolution CN précité : ce cône, dont le sommet est confondu avec le centre O de la sphère, s'appuie sur un cercle CC circonscrit au triangle joignant les centres C1, C2, C3 de trois ouvertures OA1, OB1, OC1 adjacentes situées dans un même hémisphère et correspondant respectivement aux trois voies A, B et C. Ce cercle CC s'étend dans un plan P qui constitue le plan de coupe III-III dans lequel on a représenté le changeur de champ sur la figure 3.

On propose à présent une méthode de construction du changeur 1 qui vient d'être décrit.

Le champ correspondant à la voie A étant déterminé, on calcule le diamètre des ouvertures OA1, OA2 à réaliser dans la sphère pour que le faisceau utile transmis par la lentille d'objectif 3 puisse traverser librement le magasin 5. On fixe ensuite le diamètre du magasin 5 sphérique : ce diamètre doit être suffisant pour permettre la réalisation des ouvertures OA1, OA2 de la voie A tout en libérant sur le magasin 5 de l'espace disponible pour la réalisation des autres ouvertures OB1, OB2, OC1, OC2.

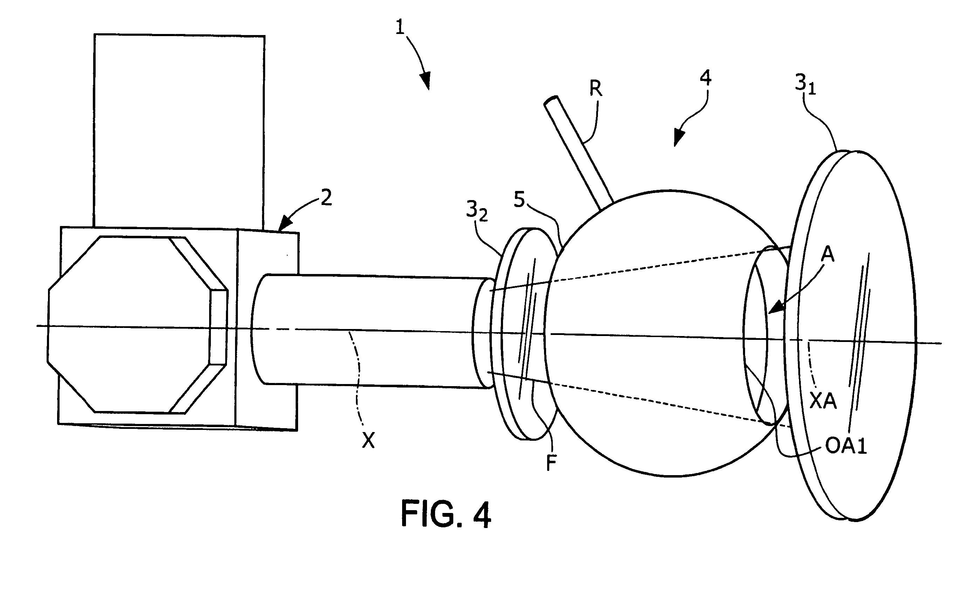

On perce alors conjointement dans la sphère les ouvertures OA1, OA2 diamétralement opposées correspondant à la voie A (figure 4).

On place alors l'axe XA de la voie A, défini par la droite joignant le centre des ouvertures OA1, OA2, sur l'axe optique principal X, puis on fixe l'axe R de rotation du magasin 5 de telle manière qu'il ne rencontre pas les ouvertures OA1, OA2 (figure 4).

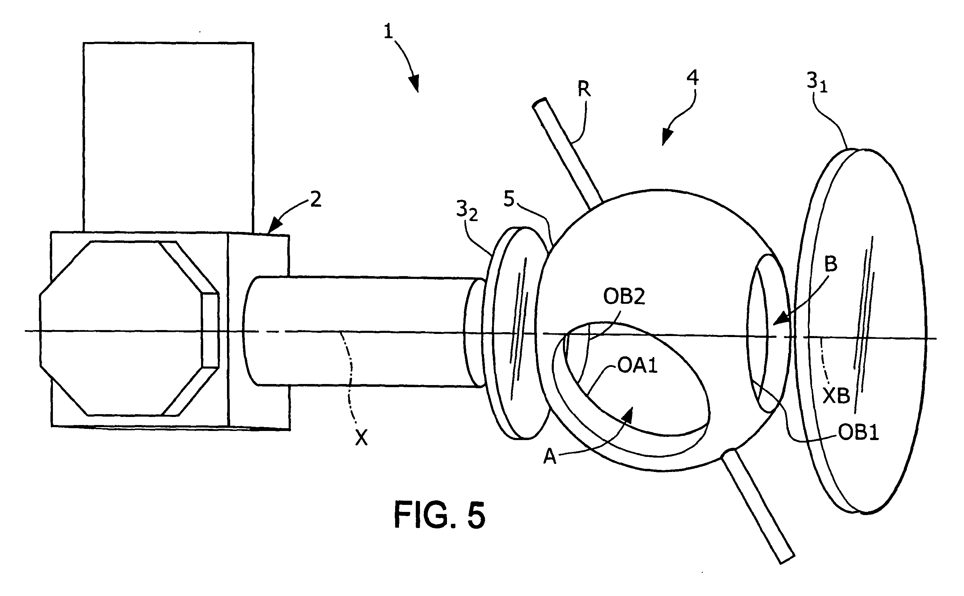

Le diamètre des lentilles LB1, LB2 de la voie B étant déterminé, on fait tourner la sphère autour de son axe R de rotation jusqu'à ce qu'il existe sur celle-ci, autour de l'axe optique principal X, un espace suffisant pour pratiquer suivant cet axe X deux alésages OB1, OB2 diamétralement opposés d'un diamètre correspondant au diamètre des lentilles LB1, LB2 de la voie B, sans que ces alésages OB1, OB2 n'empiètent sur les alésages OA1, OA2 de la voie A déjà réalisés (figure 5).

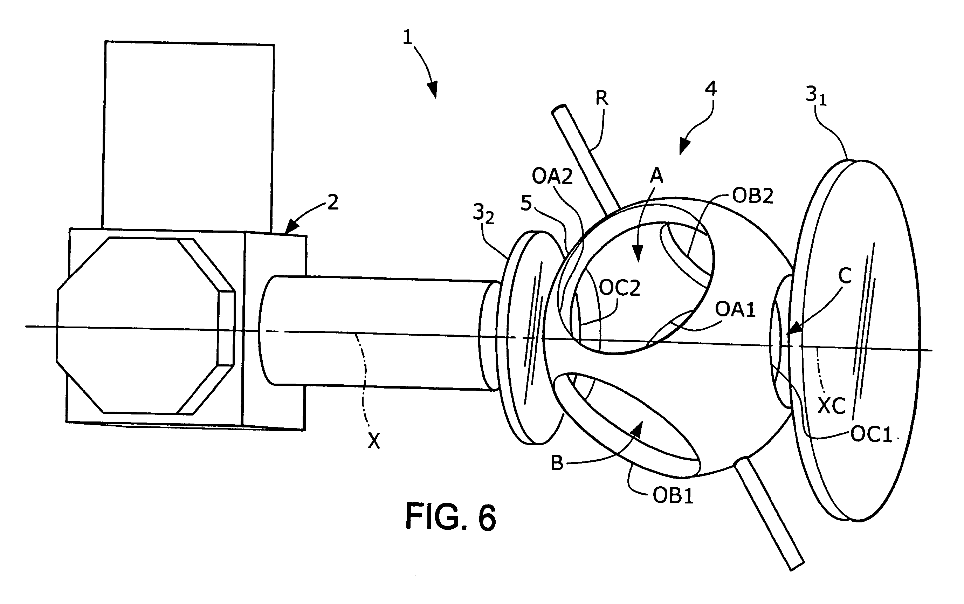

Puis on réitère cette opération pour la voie C, dont les lentilles LC1, LC2 présentent, compte tenu de la sélection de champs présentée ci-dessus, un diamètre inférieur à celui des lentilles LB1, LB2 de la voie B (figure 6).

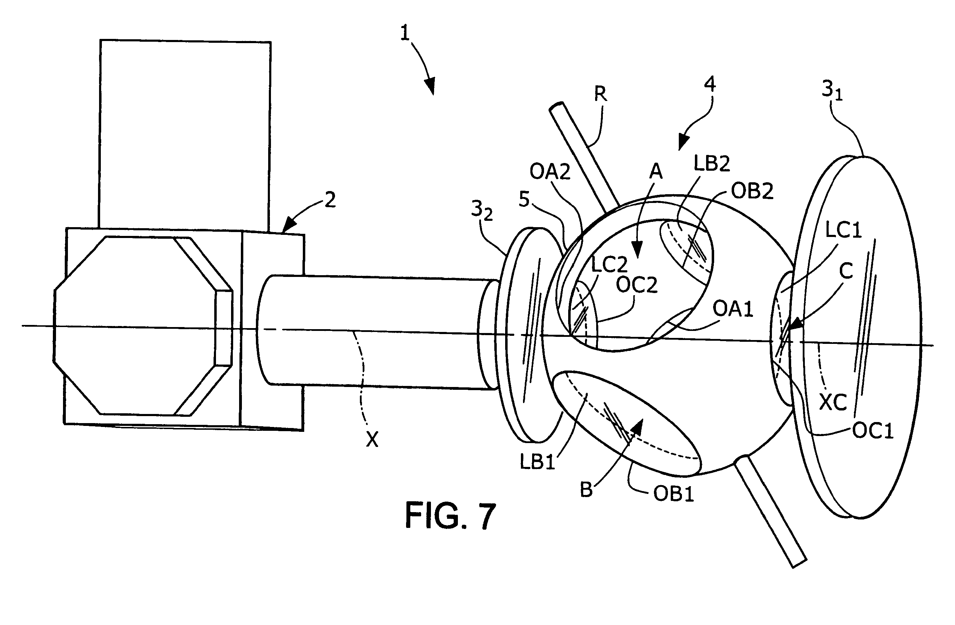

Enfin, on monte les lentilles LB1, LB2, LC1, LC2 des voies B et C dans leurs ouvertures OB1, OB2 et OC1, OC2 respectives (figure 7).

La forme sphérique du magasin 5 permet d'en accroître la compacité - et donc à la fois l'encombrement et le poids. L'écartement entre la lentille d'objectif 3 et le module de détection 2, en particulier, est plus faible que dans les dispositifs connus. Par ailleurs, l'inertie du magasin 5 étant également plus faible que dans les dispositifs connus, le changement de champ est effectué plus rapidement. Compte tenu de la symétrie de révolution du magasin 5, son centre d'inertie peut plus facilement être rapproché (par équilibrage) de son axe R de rotation, au bénéfice de la stabilité de l'axe optique de la caméra 1, ce qui est particulièrement appréciable dans la configuration « tracking ».

L'invention n'est nullement limitée au mode de réalisation qui vient d'être décrit, et, sans sortir de son cadre, diverses modifications peuvent être apportées au changeur 4.

En particulier, les valeurs de champ indiquées ci-dessus ne sont données qu'à titre d'exemple. Selon les applications, il est envisageable d'en choisir d'autres. De même, le nombre de voies optiques peut être supérieur à trois : ainsi, il est notamment envisageable de prévoir une voie spécifique pour la calibration du module de détection 2.

De plus, la méthode de construction du changeur 4, décrite ci-dessus, est également fournie à titre d'exemple, la succession particulière d'étapes de construction ayant pour simple vocation de permettre à l'homme du métier de comprendre l'esprit dans lequel le changeur 4 est conçu et de pouvoir le réaliser. Cependant, pour ce qui concerne la fabrication du changeur 4, il va de soi que certaines étapes peuvent être interverties, ou être réalisées conjointement.

De même, il a été indiqué que le magasin 5 est réalisé à partir d'une sphère creuse : ce choix vise à minimiser son poids. Toutefois, en pratique, il est bien entendu envisageable de réaliser le magasin 5 par perçage des ouvertures OA1 à OC2 dans une sphère pleine.

Il est à noter qu'à performances égales (c'est-à-dire pour une même sélection de voies optiques), le changeur de champ 4 suivant l'invention permet un gain de masse de 25 % au moins par rapport aux changeurs connus.

## Revendications

1. Dispositif (4) de changement de champ comprenant :
- un magasin (5) tournant monté en rotation autour d'un axe (R) de rotation confondu avec un axe de symétrie du magasin (5) incliné par rapport à un axe optique (X) principal fixe, et
- au moins trois voies optiques (A, B, C) prévues sur ledit magasin (5) et présentant des axes optiques respectifs (XA, XB, XC) concourants inclinés d'un même angle (α) par rapport à l'axe (R) de rotation ;
ledit magasin (5) pouvant tourner autour de son axe (R) de rotation suivant des angles (β, β2, β3) de rotation prédéterminés pour placer alternativement chacune des voies optiques (A, B, C) dans l'axe optique (X) principal ;
ce dispositif étant **caractérisé en ce que** le magasin (5) est de forme générale sphérique, et **en ce que** les voies optiques (A, B, C) sont disposées sur le magasin (5) de telle sorte qu'au moins deux des angles (β1, β2, β3) de rotation du magasin (5) sont différents.

2. Dispositif selon la revendication 1, **caractérisé en ce qu'**au moins l'un des angles (β1, β2, β3) de rotation du magasin est différent de 120°.

3. Dispositif selon la revendication 1 ou 2, **caractérisé en ce que** les angles (β1, β2, β3) de rotation sont approximativement de 140°, 120°, 100°.

4. Dispositif selon l'une des revendications 1 à 3, **caractérisé en ce que** chaque voie optique (A, B, C) comprend au moins un alésage (OA1, OA2 ; OB1, OB2 ; OC1, OC2) réalisé dans le magasin (5).

5. Dispositif selon la revendication 4, **caractérisé en ce qu'**au moins deux des voies optiques (A, B, C) comprennent une lentille (LB1, LB2 ; LC1, LC2) montée dans un alésage.

6. Dispositif selon la revendication 4 ou 5, **caractérisé en ce que** chaque voie optique (A, B, C) comprend une paire d'alésages (OA1, OA2 ; OB1, OB2 ; OC1, OC2) diamétralement opposés réalisés dans le magasin (5), et **en ce que** deux au moins des voies optiques (A, B, C) comprennent un jeu de lentilles (LB1, LB2 ; LC1, LC2) montées dans deux alésages (OB1, OB2 ; OC1, OC2) diamétralement opposés, respectivement.

7. Dispositif selon l'une des revendications 1 à 6, **caractérisé en ce que** l'angle (α) d'inclinaison de l'axe (R) de rotation du magasin par rapport à l'axe optique principal est compris entre 55° et 65°.

8. Dispositif selon la revendication 7, **caractérisé en ce que** l'angle (α) d'inclinaison de l'axe (R) de rotation du magasin (5) par rapport à l'axe optique (X) principal est de 59,5°.

9. Dispositif selon l'une quelconque des revendications 1 à 8, **caractérisé en ce que** les voies optiques (A, B, C) sont au nombre de trois et définissent respectivement un petit champ, un champ moyen et un grand champ.

10. Dispositif selon la revendication 9, **caractérisé en ce que** le petit champ a une valeur de l'ordre de 0,5° à 2°, **en ce que** le champ moyen a une valeur de l'ordre de 5° à 10°, et **en ce que** le grand champ a une valeur de l'ordre de 30° à 55°.

11. Dispositif selon la revendication 9, **caractérisé en ce que** les voies optiques (A, B, C) définissent des champs d'ouvertures angulaires respectives d'environ 1°, 10° et 40°.

12. Caméra (1) comprenant un module optique frontal (3₁), un dispositif (4) de changement de champ selon l'une des revendications 1 à 11, un module optique arrière incluant un élément de focalisation (3₂), et un module de détection (2).

## Claims

1. Field changer device (4) comprising:
- a rotary magazine (5) mounted so as to rotate about a rotation axis (R) coincident with an axis of symmetry of the magazine (5), which is inclined to a fixed principal optical axis (X); and
- at least three optical channels (A, B, C) provided in said magazine (5) and having concurrent respective optical axes (XA, XB, XC) inclined at the same angle (α) to the rotation axis (R),
said magazine (5) being adapted to rotate about its rotation axis (R) through predetermined rotation angles (β1, β2, β3) in order to place each of the optical channels (A, B, C) alternately along the principal optical axis (X),
this device being **characterized in that** the magazine (5) is of spherical general shape and **in that** the optical channels (A, B, C) are arranged in the magazine (5) in such a way that at least two of the rotation angles (β1, β2, β3) of the magazine (5) are different.

2. Device according to Claim 1, **characterized in that** at least one of the angles (β1, β2, β3) of the magazine is different from 120°.

3. Device according to Claim 1 or 2, **characterized in that** the rotation angles (β1, β2, β3) are approximately 140°, 120°, 100°.

4. Device according to one of Claims 1 to 3, **characterized in that** each optical channel (A, B, C) comprises at least one bore (OA1, OA2; OB1, OB2; OC1, OC2) provided in the magazine (5).

5. Device according to Claim 4, **characterized in that** at least two of the optical channels (A, B, C) comprise a lens (LB1, LB2; LC1, LC2) mounted in a bore.

6. Device according to Claim 4 or 5, **characterized in that** each optical channel (A, B, C) comprises a pair of diametrically opposed bores (OA1, OA2; OB1, OB2; OC1, OC2) provided in the magazine (5) and **in that** at least two of the optical channels (A, B, C) comprise a set of lenses (LB1, LB2; LC1, LC2) mounted in two diametrically opposed bores (OB1, OB2; OC1, OC2), respectively.

7. Device according to one of Claims 1 to 6, **characterized in that** the angle (α) of inclination of the rotation axis (R) of the magazine to the principal optical axis is between 55° and 65°.

8. Device according to Claim 7, **characterized in that** the angle (α) of inclination of the rotation axis (R) of the magazine (5) to the principal optical axis (X) is 59.5°.

9. Device according to any one of Claims 1 to 8, **characterized in that** the optical channels (A, B, C) are three in number and define a narrow field, a medium field and a wide field, respectively.

10. Device according to Claim 9, **characterized in that** the narrow field has a value of around 0.5° to 2°, **in that** the medium field has a value of around 5 ° to 10 ° and **in that** the wide field has a value of around 30° to 55°.

11. Device according to Claim 9, **characterized in that** the optical channels (A, B, C) define fields with respective angular apertures of about 1°, 10° and 40°.

12. Camera (1) comprising a front optical module (3₁), a field changer device (4) according to one of Claims 1 to 11, a rear optical module including a focusing element (3₂), and a detection module (2).

## Patentansprüche

1. Feldwechselvorrichtung (4), die umfasst:
- ein Drehmagazin (5), das um eine im Verhältnis zu einer starren optischen Hauptachse (X) geneigten Rotationsachse (R), die mit einer Symmetrieachse des Magazins (5) zusammenfällt, rotierend montiert ist, und
- mindestens drei optische Wege (A, B, C), die auf dem Magazin (5) vorgesehen sind und jeweilige zusammenlaufende optische Achsen (XA, CB, XC) aufweisen, die im Verhältnis zu Rotationsachse (R) im selben Winkel (α) geneigt sind,
wobei das Magazin (5) um seine Rotationsachse (R) gemäß vorbestimmten Rotationswinkeln (β1, β2, β3) drehbar ist, um abwechselnd jeden der optischen Wege (A, B, C) in die optische Hauptachse (X) zu platzieren,
wobei diese Vorrichtung **dadurch gekennzeichnet ist, dass** das Magazin (5) eine generelle sphärische Form hat und dass die optischen Wege (A, B, C) auf dem Magazin (5) derart angeordnet sind, dass mindestens zwei der Rotationswinkel (β1, β2, β3) des Magazins (5) unterschiedlich sind.

2. Vorrichtung nach Anspruch 1, **dadurch gekennzeichnet, dass** mindestens einer der Rotationswinkel (β1, β2, β3) des Magazins (5) von 120° unterschiedlich ist.

3. Vorrichtung nach Anspruch 1 oder 2, **dadurch gekennzeichnet, dass** die Rotationswinkel (β1, β2, β3) zirka 140°, 120°, 100° betragen.

4. Vorrichtung nach einem der Ansprüche 1 bis 3, **dadurch gekennzeichnet, dass** jeder optische Weg (A, B, C) mindestens eine Bohrung (OA1, OA2; OB1, OB2; OC1, OC2) umfasst, die in dem Magazin (5) durchgeführt ist.

5. Vorrichtung nach Anspruch 4, **dadurch gekennzeichnet, dass** mindestens zwei der optischen Wege (A, B, C) eine in eine Bohrung montierte Linse (LB1, LB2; LC1, LC2) umfassen.

6. Vorrichtung nach Anspruch 4 oder 5, **dadurch gekennzeichnet, dass** jeder optische Weg (A, B, C) ein diametral gegenüberliegend in dem Magazin (5) durchgeführtes Bohrungspaar (OA1, OA2; OB1, OB2; OC1, OC2) umfasst und dass mindestens zwei der optischen Wege (A, B, C) ein in jeweils zwei diametral gegenüberliegenden Bohrungen (OB1, OB2; OC1, OC2) montiertes Linsenset (LB1, LB2; LC1, LC2) umfassen.

7. Vorrichtung nach einem der Ansprüche 1 bis 6, **dadurch gekennzeichnet, dass** der Neigungswinkel (α) der Rotationsachse (R) des Magazins im Verhältnis zur optischen Hauptachse zwischen 55° und 65° inbegriffen beträgt.

8. Vorrichtung nach Anspruch 7, **dadurch gekennzeichnet, dass** der Neigungswinkel (α) der Rotationsachse (R) des Magazins im Verhältnis zur optischen Hauptachse 59,5°beträgt.

9. Vorrichtung nach einem der Ansprüche 1 bis 8, **dadurch gekennzeichnet, dass** die optischen Wege (A, B, C) in der Anzahl von drei sind und jeweils ein kleines Feld, ein mittleres Feld und ein großes Feld definieren.

10. Vorrichtung nach Anspruch 9, **dadurch gekennzeichnet, dass** das kleine Feld einen Wert in der Größenordnung von 0,5° bis 2° hat, dass das mittlere Feld einen Wert in der Größenordnung von 5° bis 10° hat und dass das große Feld einen Wert in der Größenordnung von 30° bis 55° hat.

11. Vorrichtung nach Anspruch 9, **dadurch gekennzeichnet, dass** die optischen Wege (A, B, C) jeweilige winkelförmige Feldöffnungswinkel von zirka 1°, 10° und 40° definieren.

12. Kamera (1), die ein frontales optisches Modul (3₁), eine Feldwechselvorrichtung (4) nach einem der Ansprüche 1 bis 11, ein hinteres optisches Modul, das ein Fokussierungselement (3₂) einschließt, und ein Erfassungsmodul (2) umfasst.
